# EUROPÄISCHE PATENTSCHRIFT

(11) **EP 2 047 111 B1**
(45) Veröffentlichungstag und Bekanntmachung des Hinweises auf die Patenterteilung: **20.04.2011**
(21) Anmeldenummer: 07725150.2
(22) Anmeldetag: 12.05.2007
(51) Int. Cl.: F15B 13/08

(54) **MODULARE VENTILANORDNUNG FÜR UNTERSCHIEDLICHE DURCHFLUSSKATEGORIEN**
MODULAR VALVE ARRANGEMENT FOR DIFFERENT THROUGHFLOW CATEGORIES
AGENCEMENT DE SOUPAPES MODULAIRE POUR DES CATEGORIES DE DEBIT DIFFERENTES

(43) Veröffentlichungstag der Anmeldung: 15.04.2009
(73) Patentinhaber: FESTO AG & Co. KG, 73734 Esslingen (DE)
(72) Erfinder: BOGDANOWICZ, Grzegorz, 73760 Ostfildern (DE)
(74) Vertreter: Abel, Martin
(86) Internationale Anmeldenummer: PCT/EP2007/004230
(87) Internationale Veröffentlichungsnummer: WO 2008/138371

(56) Entgegenhaltungen:
- EP-A- 0 584 494
- EP-A- 1 026 430
- EP-A- 1 526 288
- DE-A1- 4 312 730
- JP-A- 2002 039 419
- "VENTILE VERSCHIEDENER HERSTELLER AUF EINER GRUNDPLATTE" O + P OLHYDRAULIK UND PNEUMATIK, VEREINIGTE FACHVERLAGE, MAINZ, DE, Bd. 49, Nr. 3, März 2005 (2005-03), Seite 186, XP001225426 ISSN: 0341-2660

## Beschreibung

Die Erfindung betrifft eine Ventilanordnung, mit mehreren Ventilbatterien, die voneinander abweichenden, für unterschiedliche Nenndurchflussraten ausgelegten Durchflusskategorien angehören und die jeweils einen Ventilträger mit internen fluidischen Ventilträgerkanälen und internen elektrischen Signalübertragungsmitteln enthalten, an dem mehrere in Richtung einer Hauptachse nebeneinander angeordnete Bestückungsplätze vorhanden sind, die jeweils einen länglichen Umriss mit in der zu der Hauptachse rechtwinkeligen Querrichtung des Ventilträgers verlaufender Längsachse aufweisen und an denen jeweils eine Ventileinheit montierbar oder montiert ist, die einen Fluidverteilteil und einen die Fluidströmung durch den Fluidverteilteil steuernden, elektrisch betätigbaren Steuerteil aufweisen, wobei der Steuerteil einen Steuerabschnitt des Bestückungsplatzes belegt und dort über elektrische Schnittstellenmittel mit den Signalübertragungsmitteln verbunden ist und wobei der Fluidverteilteil einen Fluidverteilabschnitt des Bestückungsplatzes belegt und dort über fluidische Schnittstellenmittel mit den Ventilträgerkanälen verbunden ist, und wobei ferner die zu Ventilbatterien unterschiedlicher Durchflusskategorien gehörenden Ventilträger über unterschiedliche Querabmessungen und zugunsten ihrer Fluidverteilabschnitte unterschiedlich lange Bestückungsplätze verfügen und mit ventileinheiten bestückt sind, deren Fluidverteilteile zugunsten unterschiedlich großer Nenndurchflussraten unterschiedlich lang sind.

Eine aus der DE 43 12 730 A1 bekannte Ventilanordnung dieser Art ist als Ventilstation ausgebildet, in der zwei ventilbatterien zusammengefasst sind, die unterschiedlichen Durchflusskategorien angehören, indem sie für unterschiedliche Nenndurchflussraten ausgelegt sind. Jede Ventilbatterie enthält einen modular aufgebauten Ventilträger, der mit mehreren elektrisch betätigbaren ventileinheiten bestückt ist. Die Ventileinheiten sitzen an in Richtung einer Hauptachse des jeweiligen Ventilträgers nebeneinander liegenden, sich quer zu der Hauptachse erstreckenden Bestückungsplätzen, die jeweils in einen Fluidverteilabschnitt und einen Steuerabschnitt eingeteilt sind. An dem Steuerabschnitt erfolgt über elektrische Schnittstellenmittel eine elektrische Verbindung zwischen den einzelnen Steuerteilen und im Innern des zugehörigen Ventilträgers verlaufenden Signalübertragungsmitteln. An dem Fluidverteilabschnitt steht ein Fluidverteilteil der Ventileinheit über fluidische Schnittstellenmitteln mit internen Ventilträgerkanälen in Verbindung. Die unterschiedlichen Nenndurchflussraten resultieren aus unterschiedlich langen und breiten Ventileinheiten und aus Ventilträgern, die über unterschiedliche Quer- und Höhenabmessungen verfügen und an denen unterschiedlich breite Bestückungsplätze vorgesehen sind. Bedingt durch eine unterschiedliche Ausstattung der Steuerteile bedarf es auch unterschiedlicher elektrischer Schnittstellenmittel. Alles in allem ist somit ein sehr hoher konstruktiver und auch fertigungstechnischer Aufwand erforderlich, um Ventilbatterien unterschiedlicher Durchflusskategorien zu verwirklichen.

In der EP 1 026 430 B1 ist eine modular aufgebaute Ventilbatterie beschrieben, die gleichzeitig mit für unterschiedliche Nenndurchflussraten ausgelegten Ventileinheiten ausgestattet ist. Die unterschiedlichen Nenndurchflussraten resultieren hierbei wiederum aus unterschiedlichen Breitenabmessungen der Ventileinheiten.

Eine wesentliche Aufgabe der vorliegenden Erfindung besteht darin, bei einer Ventilanordnung mit auf Ventilträgern sitzenden Ventileinheiten kostengünstige Maßnahmen zur Realisierung von Ventilbatterien unterschiedlicher Durchflusskategorien vorzuschlagen.

Zur Lösung dieser Aufgabe ist bei einer Ventilanordnung der eingangs genannten Art vorgesehen, dass die Bauhöhe der Ventilträger, die Breite der Bestückungsplätze und der Ventileinheiten und auch die elektrischen Schnittstellenmittel bei den Ventilbatterien sämtlicher Durchflusskategorien übereinstimmend ausgebildet sind.

Auf diese Weise können unterschiedliche Nenndurchflussraten mit konstantem Bestückungsraster der Ventileinheiten verwirklicht werden. Ungeachtet der zugeordneten Durchflusskategorie verfügen die Ventileinheiten wie auch die ihnen zugeordneten Bestückungsplätze an den Ventilträgern über die gleiche Breite. Variationen in der Nenndurchflussrate erreicht man durch unterschiedliche Längenabmessungen und eventuell zusätzlich auch unterschiedliche Höhenabmessungen der Ventileinheiten. Innerhalb der Ventilträger können die Ventilträgerkanäle zur Anpassung an die gewünschte Nenndurchflussrate trotz gleicher Bauhöhe der Ventilträger problemlos untergebracht werden, da durch die für höhere Nenndurchflussraten größeren Querabmessungen ausreichend Bauvolumen zur Verfügung steht, um Ventilträgerkanäle mit unterschiedlichen Strömungsquerschnitten zu integrieren. Die gleiche Bauhöhe sämtlicher Ventilträger vereinfacht die Fertigungs- und Montagemaßnahmen, was auch für die für sämtliche Ventilbatterien übereinstimmenden elektrischen Schnittstellenmittel zutrifft.

Im Rahmen der Erfindung kann man auf identische Steuerteile und auch auf identische elektrische Signalübertragungsmittel für die Ventilbatterien sämtlicher Durchflusskategorien zurückgreifen. Fertigungs-, Montage- und Prüfprozesse können vereinheitlicht werden. Letzteres gilt auch für Bestellvorgänge und logistische Maßnahmen. Eine große Anzahl von Bauteilen eignet sich zur Verwendung für jede Durchflusskategorie, so dass die Bauteilevielfalt reduziert werden kann.

Weitere vorteilhafte Maßnahmen bezüglich der Erfindung gehen aus den Unteransprüchen hervor.

Bei den Steuerteilen der Ventileinheiten handelt es sich insbesondere um Steuerventileinrichtungen. Hier empfehlen sich insbesondere Magnetventileinrichtungen oder Piezoventileinrichtungen.

Für kleinere Nenndurchflussraten kann die Steuerventileinrichtung die einzige Ventileinrichtung der Ventileinheit sein. Das Fluidverteilteil kann hierbei als einfach herstellbare, ventillose Fluiddurchleitungseinrichtung ausgeführt sein. Zur Realisierung größerer Nenndurchflussraten fungiert die Steuerventileinrichtung zweckmäßigerweise als Vorsteuerventileinrichtung eines Fluidverteilteils, das als Verteilerventileinrichtung ausgebildet ist. Die Ventileinheit ist hier also vom vorgesteuerten Typ, wobei durch Variation von insbesondere der Baulänge der Verteilerventileinrichtung und eventuell zusätzlich auch deren Bauhöhe das erforderliche Volumen für die benötigten Strömungsquerschnitte geschaffen werden kann.

Zweckmäßigerweise sind die Steuerteile der ventileinheiten ungeachtet der zugeordneten Durchflusskategorie identisch ausgebildet. Man benötigt dadurch unabhängig von der gewählten Durchflusskategorie stets nur einen einzigen, einheitlichen Typ von Steuerteilen.

Für die Unterbringung der internen elektrischen Signalübertragungsmittel sind die Ventilträger zweckmäßigerweise von je einem Aufnahmekanal längs durchzogen. Das Zusammenwirken der elektrischen Schnittstellenmittel wird hierbei mittels Durchbrechungen gewährleistet, die den Aufnahmekanal mit den Steuerabschnitten der Bestückungsplätze verbinden und die den Durchgriff der elektrischen Schnittstellenstrukturen gestatten. Ausgestaltung und Anordnung des Aufnahmekanals und der Durchbrechungen sind bei den Ventilträgern ungeachtet der zugeordneten Durchflusskategorie zweckmäßigerweise identisch.

In den Aufnahmekanal kann eine Verkettungsplatine für die Signalübertragung eingesetzt sein. Der Begriff "Signal" ist hier in einem weiten Sinne zu verstehen und kann sowohl Steuersignale umfassen wie auch Betätigungsenergie.

Bei den Ventilträgern handelt es sich vorzugsweise um einstückige Plattenkörper, deren Länge in Richtung der Hauptachse nach Bedarf wählbar ist, in Abhängigkeit von der Anzahl der erforderlichen Bestückungsplätze. Alternativ ist allerdings auch ein in Längsrichtung modularer Aufbau der Ventilträger möglich, so dass sich der Ventilträger aus einer variablen Anzahl aneinandersetzbarer Ventilträgermodule zusammensetzt, die jeweils einen oder mehrere Bestückungsplätze aufweisen.

Zweckmäßigerweise kommen bei sämtlichen Ventilbatterien die gleichen Befestigungsprinzipien für die Ventileinheiten zur Anwendung. Am einfachsten ist eine Schraubbefestigung der Ventileinheiten am zugeordneten Ventilträger.

Nachfolgend wird die Erfindung anhand der beiliegenden Zeichnung näher erläutert. In dieser zeigen:
- Figuren 1a bis 1c: drei Ventilbatterien unterschiedlicher Durchflusskategorien einer bevorzugten Ausgestal- tung der Ventilanordnung in jeweils perspektivi- scher Darstellung,
- Figuren 2a bis 2c: je eine Draufsicht der Ventilbatterien aus Figuren 1a, 1b und 1c,
- Figur 3a: einen Querschnitt durch die Ventilbatterie aus Fi- guren 1a und 2a gemäß Schnittlinie IIIa-IIIa,
- Figur 3b: einen Querschnitt durch die Ventilbatterie aus Fi- guren 1b und 2b gemäß Schnittlinie IIIb-IIIb, und
- Figur 3c: einen Querschnitt durch die Ventilbatterie aus Fi- guren 1c und 2c gemäß Schnittlinie IIIc-IIIc.

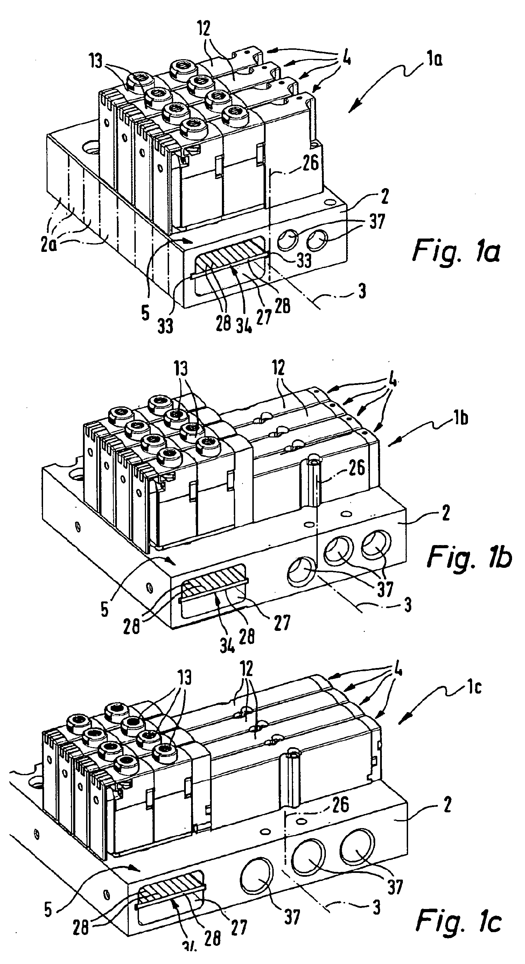

Die Ventilanordnung des Ausführungsbeispiels beinhaltet drei voneinander unabhängige, eigenständige Ventilbatterien, deren erste (1a) in Figuren 1a, 2a und 3a, deren zweite (1b) in Figuren 1b, 2b und 3b und deren dritte (1c) in Figuren 1c, 2c und 3c abgebildet ist. Diese drei Ventilbatterien sind für unterschiedliche Nenndurchflussraten ausgelegt und gehören dementsprechend unterschiedlichen Durchflusskategorien an. Die erste Ventilbatterie 1a bewältigt den geringsten Durchfluss, die dritte Ventilbatterie 1c kann den größten Durchfluss bewältigen. Eine zwischen diesen minimalen und maximalen Nenndurchflussraten liegende Nenndurchflussrate weist die zweite Ventilbatterie 1b auf.

Jede Ventilbatterie 1a, 1b, 1c verfügt über einen Ventilträger 2 mit einer seine Längsrichtung definierenden Hauptachse 3. Exemplarisch ist der Ventilträger 2 jeweils einstückig plattenförmig ausgebildet. Er könnte sich allerdings auch aus einer Mehrzahl in Richtung der Hauptachse 3 aneinander gesetzter Ventilträgermodule 2a zusammensetzen, wie dies in Figur 1a strichpunktiert angedeutet ist.

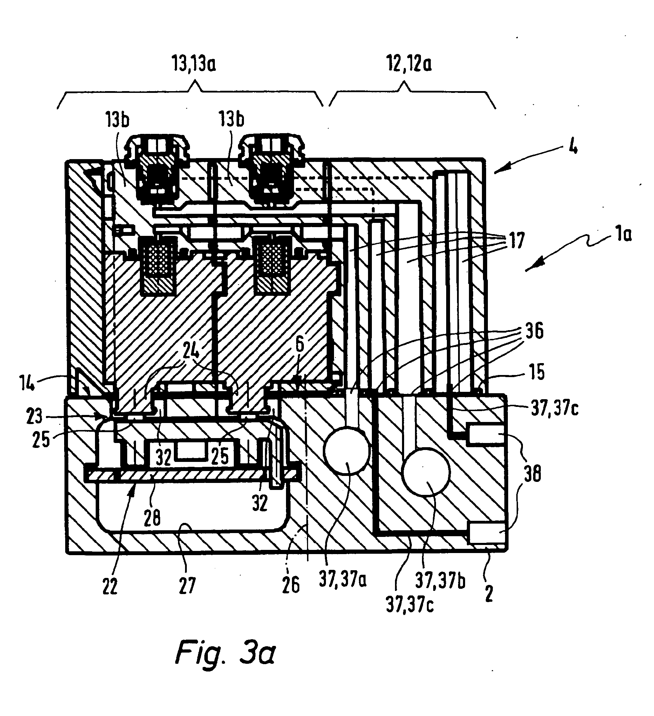

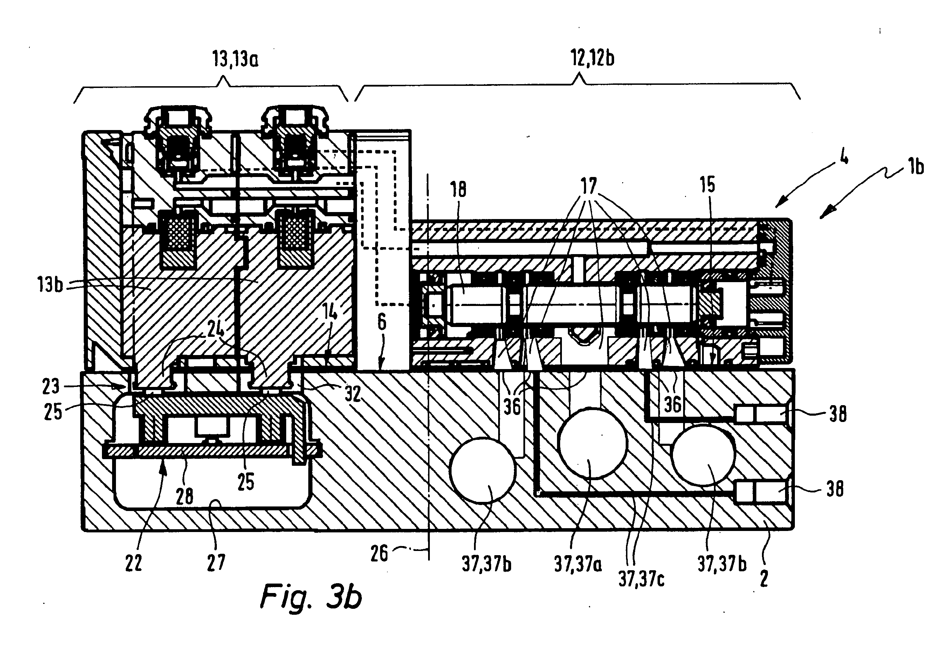

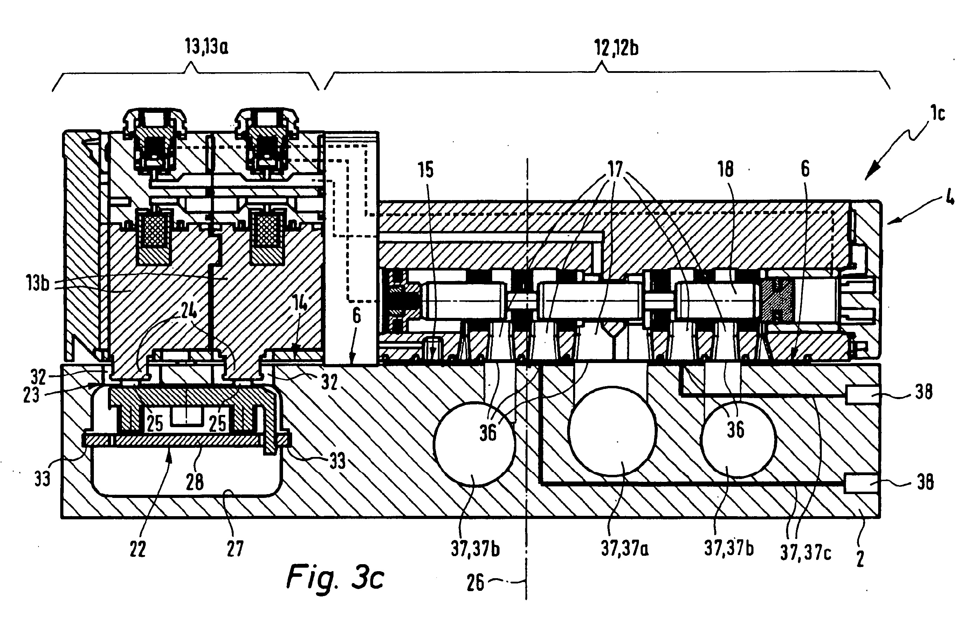

Vorzugsweise hat der Ventilträger 2 quer zu der Hauptachse 3 einen rechteckigen Querschnitt, wie dies insbesondere aus Figuren 3a, 3b und 3c zum Ausdruck kommt.

Eine der beiden großflächigen Außenflächen des Ventilträgers 2 bildet eine zur Bestückung mit einzelnen Ventileinheiten 4 vorgesehene Bestückungsfläche 5. Sie hat zweckmäßigerweise einen rechteckigen Umriss.

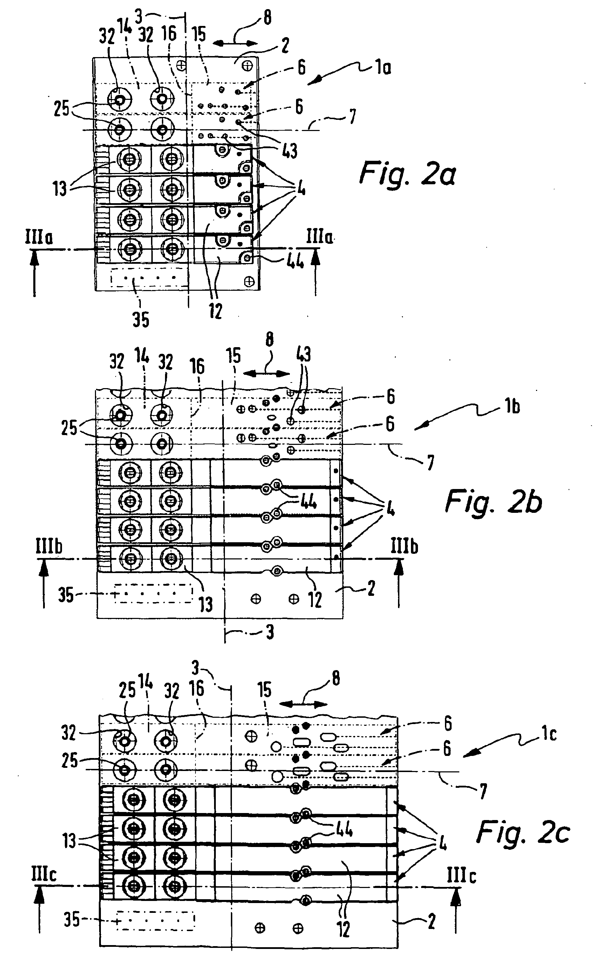

Die Bestückungsfläche 5 ist in eine Mehrzahl von Bestückungsplätzen 6 eingeteilt, die in Richtung der Hauptachse 3 nebeneinander liegen. Auf jedem dieser Bestückungsplätze 6 kann eine der Ventileinheiten 4 montiert werden. Zur Veranschaulichung sind die Ventilbatterien 1a, 1b, 1c in der Zeichnung lediglich in einem teilbestücktem Zustand gezeigt, so dass einige Bestückungsplätze 6 nicht belegt sind. Deren Umrisse sind zur Verdeutlichung in Figuren 2a, 2b, 2c durch strichpunktierte Linien kenntlich gemacht.

Ersichtlich haben die Bestückungsplätze 6 einen länglichen Umriss mit einer Längsachse 7, die rechtwinkelig zu der Hauptachse 3 in der durch einen Doppelpfeil angedeuteten Querrichtung 8 des zugeordneten Ventilträgers 2 verläuft. Die Anordnung ist insbesondere so getroffen, dass sich der Bestückungsplatz 6 über die gesamte in der Querrichtung 8 gemessene Breite des Ventilträgers 2 hinwegerstreckt. Die Bestückungsplätze 6 liegen jeweils längsseits nebeneinander.

Die auch als Breitenabmessungen bezeichenbaren Querabmessungen der Ventilträger 2 in der Querrichtung 8 sind bei den einzelnen Ventilbatterien 1a, 1b, 1c unterschiedlich. Sie sind insbesondere umso größer, je höher die Durchflusskategorie ist, je größer also die von der jeweiligen Ventilbatterie 1a, 1b, 1c bewältigbare Nenndurchflussrate ist. Gleiches gilt für die Längenabmessungen der jeweils zugeordneten Bestückungsplätze 6. Bei der ersten Ventilbatterie 1a sind die Abmessungen am geringsten, bei der dritten Ventilbatterie 1c am größten und bei der zweiten Ventilbatterie 1b liegen sie dazwischen.

Ungeachtet der Zugehörigkeit zu der einen oder anderen Durchflusskategorie verfügen allerdings die Bestückungsplätze 6 sämtlicher Ventilträger 2 in der Richtung der Hauptachse 3 über identische Breitenabmessungen. Man hat es also mit Bestückungsplätzen 6 zu tun, die unabhängig von der Durchflusskategorie gleich breit, abhängig von der Durchflusskategorie jedoch unterschiedlich lang sind.

Diese vorgenannte Längen- und Breitendefinition gilt auch für die Ventileinheiten 4 der einzelnen Ventilbatterien 1a, 1b, 1c. Die Breite sämtlicher Ventileinheiten 4 ist also unabhängig von der Nenndurchflussrate gleich, während die Länge umso größer ist, je größer auch die Nenndurchflussrate ist. Zweckmäßigerweise stimmen Länge und Breite mit den entsprechenden Abmessungen des jeweils zugeordneten Bestückungsplatzes 6 überein.

Die Länge der Ventilträger 2 kann bei den verschiedenen Ventilbatterien 1a, 1b, 1c unterschiedlich sein. Sie orientiert sich an der Anzahl der für den vorgesehenen Anwendungszweck zu tragenden Ventileinheiten 4. Es müssen also nicht sämtliche Ventilbatterien 1a, 1b, 1c einer Ventilanordnung über die gleiche Länge verfügen. Die tatsächliche Baulänge wird bei der Herstellung der jeweiligen Ventilbatterie 1a, 1b, 1c festgelegt, insbesondere durch Ablängen von einem in Meterware vorliegenden Profilmaterial.

Der Aufbau der Ventileinheiten 4 ist unabhängig von der zugehörigen Durchflusskategorie gleich strukturiert. Jede Ventileinheit 4 verfügt über einen Fluidverteilteil 12 und einen damit zu einer selbsttragenden Baugruppe zusammengefassten, elektrisch betätigbaren Steuerteil 13. Fluidverteilteil 12 und Steuerteil 13 sind in der Längsrichtung der Ventileinheit 4 aufeinanderfolgend angeordnet, wobei das Steuerteil 13 den rückwärtigen Endbereich der jeweiligen Ventileinheit 4 definiert. Das Steuerteil 13 ist in der Lage, in Abhängigkeit von seinem Betriebszustand die Fluidströmung durch den zugeordneten Fluidverteilteil 12 zu steuern.

Im an einem Bestückungsplatz 6 montierten Zustand belegt die Ventileinheit 4 mit ihrem Steuerteil 13 einen als Steuerabschnitt 14 bezeichneten Abschnitt des Bestückungsplatzes 6 und das Fluidverteilteil 12 einen sich in Richtung der Längsachse 7 daran anschließenden, als Fluidverteilabschnitt 15 bezeichneten Abschnitt des Bestückungsplatzes 6. In Figuren 2a, 2b und 2c ist der Übergangsbereich zwischen diesen beiden Steuerabschnitten 14, 15 durch je eine strichpunktierte imaginäre Trennlinie 16 markiert.

Bei sämtlichen Ventileinheiten 4 des Ausführungsbeispiels ist das Steuerteil 13 als elektrisch betätigbare Steuerventileinrichtung 13a ausgebildet. Exemplarisch setzt sie sich aus jeweils zwei in Richtung der Längsachse 7 aufeinanderfolgend angeordneten Steuerventileinheiten 13b zusammen, wobei diese Anzahl jedoch nicht bindend ist. So könnte die Steuerventileinrichtung 13a beispielsweise auch nur eine einzige Steuerventileinheit 13b beinhalten.

Vorzugsweise ist jede Steuerventileinrichtung 13a als Magnetventileinrichtung ausgebildet, doch könnte sie beispielsweise auch als Piezoventileinrichtung oder als elektrostatisch aktivierbare Mikroventileinrichtung ausgeführt sein.

Das Fluidverteilteil 12 ist von mehreren Fluidverteilkanälen 17 durchsetzt. Das Steuerteil 13 ist in der Lage, die Fluidströmung durch diese Fluidverteilkanäle 17 hindurch zu steuern, indem es die Fluidverteilkanäle 17 in einem bestimmten Muster miteinander verbindet oder von einander abtrennt. Ist eine Ventileinheit 4 wie im Falle der ersten Ventilbatterie 1a für eine relativ kleine Nenndurchflussrate ausgelegt, kann die Steuerventileinrichtung 13a die einzige Ventileinrichtung der Ventileinheit 4 sein. Das Fluidverteilteil 12 ist hierbei eine ventillose Fluiddurchleitungseinrichtung 12a, wobei die Fluidströmung durch die Fluidverteilkanäle 17 der Fluiddurchleitungseinrichtung 12a ausschließlich und direkt von der Steuerventileinrichtung 13a gesteuert wird. Die Nenndurchflussrate der Ventileinheit 1 ist hierbei normalerweise durch die Nenndurchflussrate der Steuerventileinrichtung 13a definiert.

Bei für höhere Nenndurchflussraten ausgelegten Ventileinheiten 4, wie dies bei der zweiten und dritten Ventilbatterie 1b, 1c der Ventilanordnung der Fall ist, ist das Fluidverteilteil 12 zweckmäßigerweise als Verteilerventileinrichtung 12b ausgebildet, die einen höheren Fluiddurchsatz steuern kann als die Steuerventileinrichtung 13a. Letztere fungiert hier lediglich als Vorsteuerventileinrichtung für die verteilerventileinrichtung 12b und steuert somit die Fluidströmung in dem Fluidverteilteil 12 nur indirekt. Die Ventileinheiten 4 sind hier also als vorgesteuerte Mehrwegeventile ausgeführt.

Jede Verteilerventileinrichtung 12b beinhaltet mindestens ein Ventilglied 18, das in den Verlauf zumindest einiger Fluidverteilkanäle 17 eingeschaltet ist und in Abhängigkeit von seiner aktuellen Schaltstellung die Fluidströmung durch die Fluidverteilkanäle 17 beeinflusst. Die Schaltstellung des Ventilgliedes 18 wird in an sich bekannter Weise durch Fluidkraft hervorgerufen, und zwar gesteuert durch die Steuerventileinrichtung 13a.

Da hier der steuerbare Fluiddurchsatz der Fluidverteilkanäle 17 nicht durch die Schaltkraft der Steuerventileinrichtung 13a beschränkt ist, lassen sich höhere Nenndurchflussraten beherrschen als bei nicht vorgesteuerten Ventileinheiten 4 wie im Falle der ersten Ventilbatterie 1a.

Jedes Steuerteil 13 erhält seine elektrischen Betätigungssignale von im Innern des Ventilträgers 2 verlegten elektrischen Signalübertragungsmitteln 22. Diese stehen im installierten Zustand der Ventileinheiten 4 über zugeordnete elektrische Schnittstellenmittel 23 mit dem zugeordneten Steuerteil 13 in elektrischer Verbindung. Von Vorteil ist hierbei, dass diese elektrischen Schnittstellenmittel 23 ungeachtet der jeweiligen Durchflusskategorie bei allen Ventilbatterien der Ventilanordnung stets gleich ausgebildet sind. Es liegt also eine für die Ventileinheiten 4 sämtlicher Ventilbatterien 1a, 1b, 1c identische elektrische Schnittstelle vor, was den Herstellungsaufwand auf ein Minimum reduziert.

Zweckmäßigerweise sind sogar die elektrisch betätigbaren Steuerteile 13 bei allen Durchflusskategorien gleich ausgebildet. Man kann somit auf ein und denselben Typ von Steuerteil 13 zurückgreifen, unabhängig davon, ob dieses eine direkte Fluidsteuerung vornimmt oder eine indirekte Fluidsteuerung durch Betätigung einer Verteilerventileinrichtung 12b.

Die elektrischen Schnittstellenmittel 23 beinhalten an der dem Ventilträger 2 zugewandten Unterseite der jeweiligen Ventileinheit 4 angeordnete ventilseitige Kontaktmittel 24. Diese gelangen selbsttätig in elektrischen Kontakt mit ebenfalls zu den elektrischen Schnittstellenmitteln 23 gehörenden ventilträgerseitigen Kontaktmitteln 25, die im Bereich eines jeweiligen Steuerabschnittes 14 angeordnet sind und jeweils mit den elektrischen Signalübertragungsmitteln 22 elektrisch leitend verbunden sind. Bei den Kontaktmitteln 24, 25 handelt es sich vorzugsweise um Steckkontaktmittel.

Jeder Ventilträger 2 ist in einem Bereich, der in Richtung der zu der Bestückungsfläche 5 rechtwinkeligen Hochachse 26 unterhalb des Steuerabschnittes 14 liegt, von einem sich parallel zu der Hauptachse 3 erstreckenden Aufnahmekanal 27 durchsetzt. In diesem sind zweckmäßigerweise die elektrischen Signalübertragungsmittel 22 untergebracht. Selbige umfassen beim Ausführungsbeispiel jeweils eine elektrische Verkettungsplatine 28, die sämtliche Steuerabschnitte 14 passiert und die im Bereich der einzelnen Steuerabschnitte 14 die ventilträgerseitigen Kontaktmittel 25 trägt. Damit diese ventilträgerseitigen Kontaktmittel 25 für die ventilseitigen Kontaktmittel 24 zugänglich sind, ist die Wandung des Ventilträgers 2 im Bereich jedes Steuerabschnittes 14, den ventilträgerseitigen Kontaktmitteln 25 in Richtung der Hochachse 6 gegenüberliegend, von je mindestens einer auch zu den elektrischen Schnittstellenmitteln 23 gehörenden Durchbrechung 32 durchsetzt, die den Steuerabschnitt 14 mit dem Aufnahmekanal 27 verbindet. Diese Durchbrechungen 32 ermöglichen den Durchgriff der ventilseitigen Kontaktmittel 24 und/oder der ventilträgerseitigen Kontaktmittel 25 zum Zwecke ihrer Vereinigung.

Exemplarisch beinhalten die elektrischen Schnittstellenmittel 23 bei jedem Steuerabschnitt 14 jeweils zwei in Richtung der Längsachse 6 nebeneinander angeordnete Durchbrechungen 32, durch die hindurch die elektrische Kontaktierung stattfindet.

Der Aufnahmekanal 27 ist bei allen Ventilträgern 2 zweckmäßigerweise mit identischem Querschnitt ausgebildet. Er kann eine oder mehrere seitliche, längs verlaufende Befestigungsnuten 33 aufweisen, in die die Verkettungsplatine 28 zu ihrer Fixierung am Ventilträger 2 eingeschoben ist.

Die Verkettungsplatine 28 trägt eine Mehrzahl längs verlaufender elektrischer Leiter 28, insbesondere in Gestalt von Leiterbahnen, die ausgehend von einem stirnseitigen Anschlussbereich 34 der Verkettungsplatine 28 zu den verschiedenen ventilträgerseitigen Kontaktmitteln 25 verlaufen. An dem Anschlussbereich 34 kann eine zentrale elektrische Anschlussvorrichtung 35 angebracht sein, die in der Zeichnung nur schematisch angedeutet ist und die eine Kommunikation mit einer externen elektronischen Steuereinrichtung ermöglicht. Beispielsweise kann es sich um eine Multipol-Anschlussvorrichtung handeln, aber auch um eine Feldbus-Anschlussvorrichtung, je nachdem, welche Art der Signalübertragung gewählt wird.

Die Fluidverteilkanäle 17 der an den Bestückungsplätzen 6 montierten Ventileinheiten 4 stehen über geeignete fluidische Schnittstellenmittel 36 mit im zugeordneten Ventilträger 2 ausgebildeten Ventilträgerkanälen 37 in Fluidverbindung. Von diesen Ventilträgerkanälen 37 ist mindestens ein Kanal als Speisekanal 37a und mindestens ein weiterer Kanal als Abfuhrkanal 37b ausgebildet. Diese beiden Kanalarten 37a, 37b durchziehen den Ventilträger 2 in Richtung seiner Hauptachse 3 und münden jeweils zu den Fluidverteilabschnitten 15 sämtlicher Bestückungsplätze 6 des zugeordneten Ventilträgers 2 aus. Außerdem ist jedem Fluidverteilabschnitt 15 mindestens ein weiterer Ventilträgerkanal 37 individuell zugeordnet, bei dem es sich um einen Arbeitskanal 37c handelt, der insbesondere quer zu der Hauptachse 3 in dem Ventilträger 2 verläuft und über eine Anschlussöffnung 38 zu einer seitlichen Außenfläche des Ventilträgers 2 ausmündet. Exemplarisch gehen von jedem Fluidverteilabschnitt 15 zwei solcher Arbeitskanäle 37c aus.

Im Betrieb einer Ventilbatterie 1a, 1b, 1c ist der Speisekanal 37a an eine ein fluidisches Druckmedium liefernde Druckquelle angeschlossen, während der mindestens eine Abfuhrkanal 37b mit einer Drucksenke in Verbindung steht, insbesondere mit der Atmosphäre. Betrieben werden die Ventilbatterien 1a, 1b, 1c insbesondere mit Druckluft, wobei auch andere gasförmige Medien oder auch flüssige Medien prinzipiell verwendbar sind.

An die Anschlussöffnungen 38 der Arbeitskanäle 37c sind anzusteuernde Verbraucher anschließbar, beispielsweise mittels Fluidkraft betätigbare Antriebe.

Je nach Betätigungszustand einer Ventileinheit 4 ist der daran angeschlossene mindestens eine Arbeitskanal 37c mit entweder dem Speisekanal 37a oder einem Abfuhrkanal 37b verbunden.

Die fluidischen Schnittstellenmittel 36 bestehen insbesondere aus an den Fluidverteilabschnitten 15 angeordneten Kanalmündungen 43 der Ventilträgerkanäle 37 und damit kommunizierenden weiteren Kanalmündungen an der Unterseite eines jeweiligen Fluidverteilteils 12, die zu den darin verlaufenden Fluidverteilkanälen 17 gehören.

Wie sich aus der Zeichnung unmittelbar entnehmen lässt, resultiert die unterschiedliche Länge der Bestückungsplätze 6 insbesondere aus den unterschiedlichen Längenabmessungen der Fluidverteilabschnitte 15, in Anpassung an die unterschiedliche Länge der Fluidverteilteile 12 der einzelnen Ventileinheiten 4. Die Fluidverteilabschnitte 15 und Fluidverteilteile 12 sind umso länger je größer die von ihnen zu bewältigende Nenndurchflussrate ist. Dies hängt damit zusammen, dass mit zunehmender Nenndurchflussrate die Kanalquerschnitte der Fluidverteilkanäle 17 größer werden und entsprechend mehr Volumen innerhalb des Gehäuses eines jeweiligen Fluidverteilteils 12 einnehmen.

Wesentlich ist allerdings, dass die in Richtung der Hauptachse 3 gemessene Breite der Bestückungsplätze 6 und der Ventileinheiten 4 für die Ventilbatterien 1a, 1b, 1c sämtlicher Durchflusskategorien die gleiche ist. Das Montageraster der Ventileinheiten 4 an den Ventilträgern 2 der einzelnen Ventilbatterien 1a, 1b, 1c ist also konstant.

Es besteht allerdings die Möglichkeit, die in der Richtung der zu der Bestückungsfläche 5 rechtwinkeligen Hochachse 26 gemessene Bauhöhe der Fluidverteilteile 12 zur optimalen Unterbringung der Fluidverteilkanäle 17 zu variieren.

Eine Übereinstimmung bei den Ventilbatterien 1a, 1b, 1c sämtlicher Durchflusskategorien liegt hingegen in der in Richtung der Hochachse 26 gemessenen Bauhöhe der einzelnen Ventilträger 2 vor. Dadurch kann als Ausgangsmaterial auf gleich dickes Plattenmaterial zurückgegriffen werden.

Bezüglich den unterschiedlichen Ventilträgern 2 liegt also eine Übereinstimmung hinsichtlich ihrer Bauhöhe sowie hinsichtlich der Breite der Bestückungsplätze 6 und auch hinsichtlich der zugeordneten elektrischen Schnittstellenmittel 23, 25, 32 vor. Diese Parameter sind für alle Ventilträger 2 identisch, unabhängig von der zugeordneten Durchflusskategorie. Als variable Parameter bleiben somit nur die sich an der Nenndurchflussrate orientierenden Querabmessungen der Ventilträger 2 sowie die Verteilung und Ausgestaltung der Ventilträgerkanäle 37 in dem dem Fluidverteilabschnitt 15 zugeordneten Bereich des Ventilträgers 2. Man kann mit anderen Worten sagen, dass der dem Steuerabschnitt 14 zugeordnete rückwärtige Endbereich stets konstant ist und sich die Variationen lediglich in dem dem Fluidverteilabschnitt 15 zugeordneten vorderen Bereich des Ventilträgers 2 abspielen.

Gleiches gilt auch für die Ventileinheiten 4, die auch in ihrem von dem Steuerteil 13 definierten rückwärtigen Endbereich untereinander identisch ausgeführt sein können und lediglich in der Ausgestaltung des Fluidverteilteils 12 variieren, wobei dort allerdings die Baubreite eine stets konstante Größe ist.

Die Querschnitte der Ventilträgerkanäle 37 können bei allen Ventilträgern 2 identisch sein, wenn eine Auslegung hinsichtlich der maximalen Nenndurchflussrate erfolgt. Die Variation im Nenndurchfluss findet dann ausschließlich durch Verwendung von Fluidverteilteilen 12 statt, deren Fluidverteilkanäle 17 voneinander abweichende Querschnitte aufweisen. Als zweckmäßiger wird es jedoch erachtet, zur Optimierung des Kanalverlaufes auch innerhalb der Ventilträger 2 auf Ventilträgerkanäle 37 zurückzugreifen, deren Kanalquerschnitte an die von der jeweiligen Ventilbatterie 1a, 1b, 1c zu beherrschende Nenndurchflussrate angepasst sind. Beim Ausführungsbeispiel ist dies der Fall, so dass dort die Kanalquerschnitte der Fluidverteilkanäle 17 wie auch der Ventilträgerkanäle 37 mit zunehmender Nenndurchflussrate ebenfalls größer werden.

Für die Befestigung der Ventileinheiten 4 an den Ventilträgern 2 gilt, dass zweckmäßigerweise auf stets ein und dasselbe Befestigungsprinzip zurückgriffen werden sollte. Exemplarisch ist eine Schraubbefestigung vorgesehen. Die Ventileinheiten 4 in Richtung der Hochachse 26 durchsetzende Befestigungsschrauben 44 sind in Gewindebohrungen des Ventilträgers 2 eingeschraubt.

Während die Ventilanordnung des Ausführungsbeispiels über drei Ventilbatterien unterschiedlicher Durchflusskategorien verfügt, kann die Anzahl der unterschiedlichen Durchflusskategorien innerhalb ein und derselben Ventilanordnung selbstverständlich auch eine geringere oder höhere Anzahl betragen. Die Vorteile der Ventilanordnung liegen insbesondere auf der Fertigungs- und Montageseite, wo man die Möglichkeit hat, eine Ventilbatteriefamilie äußerster Flexibilität bereitzustellen, deren fluidische Leistungsfähigkeit unter Beibehaltung vieler konstanter Merkmale durch Änderung nur einiger weniger Parameter variiert werden kann.

Prinzipiell wäre es denkbar, mehrere Ventilbatterien zu einer Baueinheit zu vereinigen, wenn entsprechende Adapterteile verwendet werden. Ein wesentlicher Vorteil der Ventilanordnung liegt jedoch darin, dass die einzelnen Ventilbatterien als eigenständige Baueinheiten zur Verfügung gestellt werden können, die jeweils für sich allein und auch unabhängig voneinander betrieben werden können.

## Patentansprüche

1. Ventilanordnung, mit mehreren Ventileinheiten (4) aufweisenden Ventilbatterien (1a, 1b, 1c), die voneinander abweichenden, für unterschiedliche Nenndurchflussraten ausgelegten Durchflusskategorien angehören und die jeweils einen Ventilträger (2) mit internen fluidischen Ventilträgerkanälen (37) und internen elektrischen Signalübertragungsmitteln (22) enthalten, an dem mehrere in Richtung einer Hauptachse (3) nebeneinander angeordneten Bestückungsplätze (6) vorhanden sind, die jeweils einen länglichen Umriss mit in der zu der Hauptachse (3) rechtwinkeligen Querrichtung (8) des Ventilträgers (2) verlaufender Längsachse (7) aufweisen und an denen jeweils eine Ventileinheit (4) montierbar oder montiert ist, die einen Fluidverteilteil (12) und einen die Fluidströmung durch den Fluidverteilteil (12) steuernden, elektrisch betätigbaren Steuerteil (13) aufweisen, wobei der Steuerteil (13) einen Steuerabschnitt (14) des Bestückungsplatzes (6) belegt und dort über elektrische Schnittstellenmittel (23) mit den Signalübertragungsmitteln (22) verbunden ist und wobei der Fluidverteilteil (12) einen Fluidverteilabschnitt (15) des Bestückungsplatzes (6) belegt und dort über fluidische Schnittstellenmittel (36) mit den Ventilträgerkanälen (37) verbunden ist, und wobei ferner die zu Ventilbatterien (1a, 1b, 1c) unterschiedlicher Durchflusskategorien gehörenden Ventilträger (2) über unterschiedliche Querabmessungen und zugunsten ihrer Fluidverteilabschnitte (15) unterschiedlich lange Bestückungsplätze (6) verfügen und mit Ventileinheiten (4) bestückt sind, deren Fluidverteilteile (12) zugunsten unterschiedlich großer Nenndurchflussraten unterschiedlich lang sind, **dadurch gekennzeichnet, dass** die Bauhöhe der Ventilträger (2), die Breite der Bestückungsplätze (6) und der Ventileinheiten (4) und auch die elektrischen Schnittstellenmittel (23) bei den Ventilbatterien (1a, 1b, 1c) sämtlicher Durchflusskategorien übereinstimmend ausgebildet sind.

2. Ventilanordnung nach Anspruch 1, **dadurch gekennzeichnet, dass** die zu unterschiedlichen Durchflusskategorien gehörenden Ventilbatterien (1a, 1b, 1c) als von einander unabhängige, eigenständige Baueinheiten ausgebildet sind.

3. Ventilanordnung nach Anspruch 1 oder 2, **dadurch gekennzeichnet, dass** bei mindestens einer Ventilbatterie (1a, 1b, 1c) mindestens ein Steuerteil (13) als Steuerventileinrichtung (13a) ausgebildet ist.

4. Ventilanordnung nach Anspruch 3, **dadurch gekennzeichnet, dass** die Steuerteile (13) sämtlicher Ventilbatterien (1a, 1b, 1c) als Steuerventileinrichtungen (13a) ausgebildet sind.

5. Ventilanordnung nach einem der Ansprüche 1 bis 4, **dadurch gekennzeichnet, dass** mindestens ein Fluidverteilteil (12) mindestens einer Ventilbatterie (1a, 1b, 1c) als Verteilerventileinrichtung (12b) ausgebildet ist.

6. Ventilanordnung nach Anspruch 5, **dadurch gekennzeichnet, dass** sämtliche Fluidverteilteile (12) mindestens einer Ventilbatterie (1b, 1c) als Verteilerventileinrichtungen (12b) ausgebildet sind.

7. Ventilanordnung nach einem der Ansprüche 1 bis 6, **dadurch gekennzeichnet, dass** mindestens ein Fluidverteilteil (12) mindestens einer Ventilbatterie (1a, 1b, 1c) als ventillose Fluiddurchleitungseinrichtung (12a) ausgebildet ist.

8. Ventilanordnung nach Anspruch 7, **dadurch gekennzeichnet, dass** sämtliche Fluidverteilteile (12) mindestens einer Ventilbatterie (1a) als Fluiddurchleitungseinrichtungen (12a) ausgebildet sind.

9. Ventilanordnung nach einem der Ansprüche 1 bis 8, **dadurch gekennzeichnet, dass** die Steuerteile (13) der ventileinheiten (4) mehrerer zu unterschiedlichen Durchflusskategorien gehörender Ventilbatterien (1a, 1b, 1c) identisch ausgebildet sind.

10. Ventilanordnung nach einem der Ansprüche 1 bis 9, **dadurch gekennzeichnet, dass** die elektrischen Signalübertragungsmittel (22) mehrerer zu unterschiedlichen Durchflusskategorien gehörender Ventilbatterien (1a, 1b, 1c) identisch ausgebildet sind.

11. Ventilanordnung nach einem der Ansprüche 1 bis 10, **dadurch gekennzeichnet, dass** die Ventilträger (2) mehrerer zu unterschiedlichen Durchflusskategorien gehörender Ventilbatterien (1a, 1b, 1c) einen längs durchgehenden Aufnahmekanal (27) enthalten, der die elektrischen Signalübertragungsmittel (22) aufnimmt und der über jeweils mindestens eine die Wandung des Ventilträgers (2) durchsetzende Durchbrechung (32) zu den Steuerabschnitten (14) hin offen ist, durch die hindurch die elektrische Verbindung zwischen den Steuerteilen (13) und den Signalübertragungsmitteln (22) erfolgt.

12. Ventilanordnung nach Anspruch 11, **dadurch gekennzeichnet, dass** die Signalübertragungsmittel (22) eine in den Aufnahmekanal (27) eingesetzte und diesen längs durchziehende Verkettungsplatine (28) enthalten.

13. Ventilanordnung nach einem der Ansprüche 1 bis 12, **dadurch gekennzeichnet, dass** zumindest einige Ventilträgerkanäle (37) der zu unterschiedlichen Durchflusskategorien gehörenden Ventilbatterien (1a, 1b, 1c) über unterschiedlich große Kanalquerschnitte verfügen.

14. Ventilanordnung nach einem der Ansprüche 1 bis 13, **dadurch gekennzeichnet, dass** die Ventilträger (2) als einstückige Plattenkörper ausgebildet sind.

15. Ventilanordnung nach einem der Ansprüche 1 bis 14, **dadurch gekennzeichnet, dass** die Ventileinheiten (4) bei sämtlichen Ventilbatterien (1a, 1b, 1c) nach dem gleichen Befestigungsprinzip am Ventilträger (2) fixiert sind.

## Claims

1. Valve assembly, with several valve banks (1a, 1b, 1c) with valve units (4) and belonging to varying flow categories designed for different nominal flow rates, and each containing a valve carrier (2) with internal fluidic valve carrier passages (37) and internal signal transmission means (22), on which are provided several mounting points (6) arranged adjacent to one another along a main axis (3), each having an oblong outline with a longitudinal axis (7) running in the lateral direction (8) of the valve carrier (2) at right-angles to the main axis (3) and on each of which is or may be mounted a valve unit(4) which has a fluid distribution component (12) and an electrically actuable control component (13) which controls the fluid flow through the fluid distribution component (12), wherein the control component (13) occupies a control section (14) of the mounting point (6) and is there connected via electrical interface means (23) with the signal transmission means (22) and wherein the fluid distribution component (12) occupies a fluid distribution section (15) of the mounting point (6) and is there connected via fluidic interface means (36) to the valve carrier passages (37), and wherein also the valve carriers (2) belonging to valve banks (1a, 1b, 1 c) for different flow categories have different lateral dimensions and, to the benefit of their fluid distribution sections (15), mounting points (6) of different length and are equipped with valve units (4) with fluid distribution components (12) of different length, to the benefit of flow rates of different volume, **characterised in that** the overall height of the valve carriers (2), the width of the mounting points (6) and the valve units (4) and also the electrical interface means (23) are designed to be matching for the valve banks (1a, 1b, 1c) of all flow categories.

2. Valve assembly according to claim 1, **characterised in that** the valve banks (1a, 1b, 1c) belonging to different flow categories are designed as freestanding units independent of one another.

3. Valve assembly according to claim 1 or 2, **characterised in that** in the case of at least valve bank (1 a, 1b, 1 c), at least one control component (13) is in the form of a control valve device (13a).

4. Valve assembly according to claim 3, **characterised in that** the control components (13) of all valve banks (1a, 1b, 1 c) are in the form of control valve devices (13a).

5. Valve assembly according to any of claims 1 to 4, **characterised in that** at least one fluid distribution component (12) of at least one valve bank (1a, 1b, 1 c) is in the form of a distributor valve device (12b).

6. Valve assembly according to claim 5, **characterised in that** all fluid distribution components (12) of at least one valve bank (1b, 1c) are in the form of distributor valve devices (12b).

7. Valve assembly according to any of claims 1 to 6, **characterised in that** at least one fluid distribution component (12) of at least one valve bank (1a, 1b, 1 c) is in the form of a valveless fluid passage device (12a).

8. Valve assembly according to claim 7, **characterised in that** all fluid distribution components (12) of at one least valve bank (1a) are in the form of fluid passage devices (12a).

9. Valve assembly according to any of claims 1 to 8, **characterised in that** the control components (13) of the valve units (4) of several valve banks (1a, 1b, 1 c) belonging to different flow categories are identical in design.

10. Valve assembly according to any of claims 1 to 9, **characterised in that** the signal transmission means (22) of several valve banks (1a, 1b, 1 c) belonging to different flow categories are identical in design.

11. Valve assembly according to any of claims 1 to 10, **characterised in that** the valve carriers (2) of several valve banks (1a, 1b, 1c) belonging to different flow categories contain a continuous longitudinal locating passage (27) which accommodates the signal transmission means (22) and which is open to the control sections (14) in each case via at least one through hole (32) passing through the wall of the valve carrier (2), through which the electrical connection between the control components (13) and the signal transmission means (22) is effected.

12. Valve assembly according to claim 11, **characterised in that** the signal transmission means (22) contain an interconnection circuit board (28) inserted in the locating passage (27) and passing through it longitudinally.

13. Valve assembly according to any of claims 1 to 12, **characterised in that** at least some valve carrier passages (37) of the valve banks (1a, 1b, 1c) belonging to different flow categories have passage cross-sections of different size.

14. Valve assembly according to any of claims 1 to 13, **characterised in that** the valve carriers (2) are in the form of one-piece plate bodies.

15. Valve assembly according to any of claims 1 to 14, **characterised in that** the valve units (4) of all valve banks (1a, 1b, 1c) are fixed to the valve carrier (2) according to the same fastening principle.

## Revendications

1. Agencement de soupapes, comportant plusieurs batteries de soupapes (1a, 1b, 1c) présentant des unités de soupapes (4), qui appartiennent à des catégories de débit configurées pour différents débits nominaux, divergentes les unes des autres et qui contiennent chacune un porte-soupape (2) avec des canaux de porte-soupape (37) fluidiques internes et des moyens de transmission de signal électriques internes (22), sur lequel plusieurs emplacements de composant (6) sont disposés les uns à côté des autres en direction d'un axe principal (3), lesquels présentent chacun un contour oblong avec un axe longitudinal (7) s'étendant dans le sens transversal (8) à angle droit par rapport à l'axe principal (3) du porte-soupape (2) et sur lesquels respectivement une unité de soupapes (4) est ou peut être montée, laquelle présente une partie de distribution fluidique (12) et une partie de commande (13) pouvant être actionnée électriquement, commandant l'écoulement fluidique par la partie de distribution fluidique (12), la partie de commande (13) occupant une section de commande (14) de l'emplacement de composant (6) et y étant reliée par des moyens d'interface électriques (23) aux moyens de transmission de signal (22) et la partie de distribution fluidique (12) occupant une section de distribution fluidique (15) de l'emplacement de composant (6) et y étant reliée par des moyens d'interface fluidiques (36) aux canaux de porte-soupape (37), et les porte-soupapes (2) appartenant aux batteries de soupapes (1a, 1 b, 1 c) de différentes catégories de débit disposant de plus de différentes dimensions transversales et d'emplacements de composant (6) de longueur différente au profit de leurs sections de distribution fluidique (15) et étant équipés d'unités de soupapes (4), dont les parties de distribution fluidique (12) sont de longueur différente au profit de débits nominaux de grandeur différente, **caractérisé en ce que** la hauteur de construction des porte-soupapes (2), la largeur des emplacements de composant (6) et des unités de soupapes (4) et les moyens d'interface électriques (23) sont aussi réalisés de manière à concorder pour les batteries de soupapes (1 a, 1 b, 1 c) de toutes les catégories de débit.

2. Agencement de soupapes selon la revendication 1, **caractérisé en ce que** les batteries de soupapes (1a, 1b, 1 c) appartenant aux différentes catégories de débit sont réalisées comme des unités de construction autonomes, indépendantes les unes des autres.

3. Agencement de soupapes selon la revendication 1 ou 2, **caractérisé en ce qu'**au moins une partie de commande (13) est réalisée comme un dispositif de soupape de commande (13a) pour au moins une batterie de soupapes (1a, 1b, 1 c).

4. Agencement de soupapes selon la revendication 3, **caractérisé en ce que** les parties de commande (13) de toutes les batteries de soupapes (1a, 1b, 1 c) sont réalisées comme des dispositifs de soupape de commande (13a).

5. Agencement de soupapes selon l'une quelconque des revendications 1 à 4, **caractérisé en ce qu'**au moins une partie de distribution fluidique (12) d'au moins une batterie de soupapes (1a, 1b, 1 c) est réalisée comme un dispositif de soupape de distribution (12b).

6. Agencement de soupapes selon la revendication 5 **caractérisé en ce que** toutes les parties de distribution fluidique (12) d'au moins une batterie de soupapes (1 b, 1 c) sont réalisées comme des dispositifs de soupape de distribution (12b).

7. Agencement de soupapes selon l'une quelconque des revendications 1 à 6, **caractérisé en ce qu'**au moins une partie de distribution fluidique (12) d'au moins une batterie de soupapes (1a, 1b, 1 c) est réalisée comme un dispositif de passage fluidique sans soupape (12a).

8. Agencement de soupapes selon la revendication 7, **caractérisé en ce que** toutes les parties de distribution fluidique (12) d'au moins une batterie de soupapes (1a) sont réalisées comme des dispositifs de passage fluidique (12a).

9. Agencement de soupapes selon l'une quelconque des revendications 1 à 8, **caractérisé en ce que** les parties de commande (13) des unités de soupapes (4) de plusieurs batteries de soupapes (1a, 1b, 1 c) appartenant à différentes catégories de débit sont réalisées de manière identique.

10. Agencement de soupapes selon l'une quelconque des revendications 1 à 9, **caractérisé en ce que** les moyens de transmission de signal électriques (22) de plusieurs batteries de soupape (1a, 1b, 1 c) appartenant à différentes catégories de débit sont réalisés de manière identique.

11. Agencement de soupapes selon l'une quelconque des revendications 1 à 10, **caractérisé en ce que** les porte-soupapes (2) de plusieurs batteries de soupapes (1a, 1b, 1 c) appartenant à différentes catégories de débit contiennent un canal de réception (27) continu dans le sens longitudinal qui reçoit les moyens de transmission de signal électriques (22) et qui est ouvert par le biais de respectivement au moins un perçage (32) traversant la paroi du porte-soupape (2) vers les sections de commande (14), permettant la liaison électrique entre les parties de commande (13) et les moyens de transmission de signal (22).

12. Agencement de soupapes selon la revendication 11, **caractérisé en ce que** les moyens de transmission de signal (22) contiennent une platine d'interconnexion (28) insérée dans le canal de réception (27) et l'étirant en longueur.

13. Agencement de soupapes selon l'une quelconque des revendications 1 à 12, **caractérisé en ce qu'**au moins quelques canaux de porte-soupape (37) des batteries de soupapes (1a, 1b, 1 c) appartenant à différentes catégories de débit disposent de sections de canal de taille différente.

14. Agencement de soupapes selon l'une quelconque des revendications 1 à 13, **caractérisé en ce que** les porte-soupapes (2) sont réalisés comme des corps de plaque d'un seul tenant.

15. Agencement de soupapes selon l'une quelconque des revendications 1 à 14, **caractérisé en ce que** les unités de soupapes (4) sont fixées pour toutes les batteries de soupapes (1a, 1b, 1c) selon le même principe de fixation sur le porte-soupape (2).
